# EUROPEAN PATENT APPLICATION

(11) **EP 1 542 106 A1**
(43) Date of publication of application: **15.06.2005**
(21) Application number: 03748542.2
(22) Date of filing: 19.09.2003
(51) Int. Cl.: G05B 19/418

(54) **PART ORDERING AMOUNT CALCULATION DEVICE**

(30) Priority: 19.09.2002 WO PCT/JP02/09603
(71) Applicant: Honda Giken Kogyo Kabushiki Kaisha, Minato-ku, Tokyo 107-8556 (JP)
(72) Inventor: IIDA, Koichi, Minato-ku, Tokyo 107-8556 (JP); TANAKA, Hidenobu, Minato-ku, Tokyo 107-8556 (JP); OTSUBO, Motokazu, Minato-ku, Tokyo 107-8556 (JP); JODOI, Takafumi, Minato-ku, Tokyo 107-8556 (JP); IMAGAWA Taro, Minato-ku, Tokyo 107-8556 (JP)
(74) Representative: Poulin, Gérard
(86) International application number: PCT/JP2003/011965
(87) International publication number: WO 2004/027532

(57) **Abstract**

There are provided with an order quantity computing technique (S16, S18) that computes a relatively short-term part order quantity based on the actual quantity of the parts so as to decrease the quantity of inventory and to achieve a stable part supply, and an order quantity computing technique (S22, S24) that computes a relatively long-term order quantity based on the tentative quantity of inventory of the parts (a quantity of inventory computed based on the past production records) so as to obtain mass production effects such that one of them is selected to be used by comparing the price of the parts with the prescribed price (S14). With this, it becomes possible to easily change the part order quantity computation technique in response to the lead time of the parts, thereby enabling to effectively utilize the advantages of two different part order quantity computation techniques.

## Description

### TECHNICAL FIELD

The present invention relates to a part order quantity computation system for computing the order quantity of parts or components based on a production schedule of a product.

### BACKGROUND ART

Techniques of computing a part order quantity in a factory (assembling plant) for producing automobiles or the like can generally be classified into the following two broad categories. The first one is a so-called MRP technique, wherein the actual quantity of inventory is allocated for a required quantity (desired quantity) of parts needed in order to meet a production schedule, such that an order quantity for a relatively short period of time is computed. Therefore, the quantity of inventory can be kept to a minimum by this technique, enabling a steady supply of parts. However, it is necessary to accurately keep track of the actual quantity of inventory in order to prevent part shortages when this technique is employed, and the order timing must be appropriately managed with consideration for the lead time of parts.

The other type of technique involves allocating a tentative or provisional quantity of inventory (a quantity of inventory computed based on past order quantities and production records of parts) from the required quantity of parts and computing the order quantity for a more long-term than that of the abovementioned MRP technique. Although the quantity of inventory cannot be managed by this technique as appropriately as by the MRP technique, it is possible to make bulk orders and bundled shipments, and the benefits of mass production can therefore be obtained with respect to the unit price of parts, shipping cost, and other factors.

The two part order quantity computation techniques described above thus have different advantages. It is therefore preferable to fully utilize the advantages of both techniques by appropriately changing these two part order quantity computation techniques depending on the parts. However, since the configurations to carry out each of these two part order quantity computation techniques have conventionally been separate and independent, a complicated process was required to change the computation technique.

### DISCLOSURE OF INVENTION

An object of the present invention is therefore to solve the problem of the prior art and to provide a part order quantity computation system that can easily change the order quantity computation depending on the parts, thereby enabling to effectively utilize the advantages of the aforesaid different two part order quantity computation techniques.

In order to achieve the object, as recited in claim 1 described below, the present invention is configured to have a system for computing an order quantity of parts constituting a product based on a production schedule of the product, comprising: required part quantity computing means for computing a required quantity of the parts based on the production schedule; actual inventory quantity checking means for checking an actual quantity of inventory of the parts; first part order quantity computing means for computing a first part order quantity for a predetermined first period of time based on the computed required quantity of the parts and the checked actual quantity of inventory of the parts; tentative inventory quantity computing means for computing a tentative quantity of inventory of the parts based on a past order record of the parts and a production record of the product; second part order quantity computing means for computing a second part order quantity for a predetermined second period of time, longer than the predetermined first period of time, based on the computed required quantity of the parts and the computed tentative quantity of inventory of the parts; price inputting means for inputting a price of the parts; part price storing means for storing the inputted price of the parts; prescribed price inputting means for inputting a prescribed price to be compared with the inputted price of the parts; prescribed price storing means for storing the inputted prescribed price; selecting means for comparing the inputted price with the stored prescribed price and for selecting the first part order quantity computing means when the inputted price is greater than the stored prescribed price, while for selecting the second part order quantity computing means when the inputted price is equal to or less than the stored prescribed price; and part ordering means for ordering the parts based on the part order quantity computed by the selected part order quantity computing means.

Specifically, it is configured to have an order quantity computation technique (first part order quantity computing means) that computes a relatively short-term part order quantity based on the actual quantity of the parts so as to decrease the quantity of inventory and to achieve a stable part supply, and an order quantity computation technique (second part order quantity computing means) that computes a relatively long-term order quantity based on the tentative quantity of inventory of the parts (a quantity of inventory computed based on past order quantities and production records) so as to obtain mass production effects such that one of them is selected to be used based on the price of the parts. With this, it becomes possible to easily change the part order quantity computation technique in response to the price of the parts, thereby enabling to effectively utilize the advantages of two different part order quantity computation techniques. The term "price of the parts" used herein indicates a unit price per lot, for example, and may be a fixed price or a variable price that varies in response to the number of lots ordered.

Further, as recited in claim 2 described below, the present invention configured to have a system for computing an order quantity of parts constituting a product based on a production schedule of the product, comprising: required part quantity computing means for computing a required quantity of the parts based on the production schedule; actual inventory quantity checking means for checking an actual quantity of inventory of the parts; first part order quantity computing means for computing a first part order quantity for a predetermined first period of time based on the computed required quantity of the parts and the checked actual quantity of inventory of the parts; tentative inventory quantity computing means for computing a tentative quantity of inventory of the parts based on a past order record of the parts and a production record of the product; second part order quantity computing means for computing a second part order quantity for a predetermined second period of time, longer than the predetermined first period of time, based on the computed required quantity of the parts and the computed tentative quantity of inventory of the parts; size inputting means for inputting a size of the parts; part size storing means for storing the inputted size of the parts; prescribed size inputting means for inputting a prescribed size to be compared with the inputted size of the parts; prescribed size storing means for storing the inputted prescribed size; selecting means for comparing the inputted size with the stored prescribed size and for selecting the first part order quantity computing means when the inputted size is greater than the stored prescribed size, while for selecting the second part order quantity computing means when the inputted size is equal to or less than the stored prescribed size; and part ordering means for ordering the parts based on the part order quantity computed by the selected part order quantity computing means.

Specifically, it is configured to have an order quantity computation technique (first part order quantity computing means) that computes a relatively short-term part order quantity based on the actual quantity of the parts so as to decrease the quantity of inventory and to achieve a stable part supply, and an order quantity computation technique (second part order quantity computing means) that computes a relatively long-term order quantity based on the tentative quantity of inventory of the parts (a quantity of inventory computed based on past order quantities and production records) so as to obtain mass production effects such that one of them is selected to be used based on the size of the parts. With this, it becomes possible to easily change the part order quantity computation technique in response to the size of the parts, thereby enabling to effectively utilize the advantages of two different part order quantity computation techniques. The term "size of the parts" used herein indicates a parameter of width, depth, or height of the parts, or the volume thereof.

Further, as recited in claim 3 described below, the present invention configured to have a system for computing an order quantity of parts constituting a product based on a production schedule of the product, comprising: required part quantity computing means for computing a required quantity of the parts based on the production schedule; actual inventory quantity checking means for checking an actual quantity of inventory of the parts; first part order quantity computing means for computing a first part order quantity for a predetermined first period of time based on the computed required quantity of the parts and the checked actual quantity of inventory of the parts; tentative inventory quantity computing means for computing a tentative quantity of inventory of the parts based on a past order record of the parts and a production record of the product; second part order quantity computing means for computing a second part order quantity for a predetermined second period of time, longer than the predetermined first period of time, based on the computed required quantity of the parts and the computed tentative quantity of inventory of the parts; lead time inputting means for inputting a lead time of the parts; part lead time storing means for storing the inputted lead time of the parts; prescribed lead time inputting means for inputting a prescribed lead time to be compared with the inputted lead time of the parts; prescribed lead time storing means for storing the inputted prescribed lead time; selecting means for comparing the inputted lead time with the stored prescribed lead time and for selecting the first part order quantity computing means when the inputted lead time is greater than the stored prescribed lead time, while for selecting the second part order quantity computing means when the inputted lead time is equal to or less than the stored prescribed; and part ordering means for ordering the parts based on the part order quantity computed by the selected part order quantity computing means.

Specifically, it is configured to have an order quantity computation technique (first part order quantity computing means) that computes a relatively short-term part order quantity based on the actual quantity of the parts so as to decrease the quantity of inventory and to achieve a stable part supply, and an order quantity computation technique (second part order quantity computing means) that computes a relatively long-term order quantity based on the tentative quantity of inventory of the parts (a quantity of inventory computed based on past order quantities and production records) so as to obtain mass production effects such that one of them is selected to be used based on the lead time of the parts. With this, it becomes possible to easily change the part order quantity computation technique in response to the lead time of the parts, thereby enabling to effectively utilize the advantages of two different part order quantity computation techniques. The term "lead time of the parts" used herein indicates a period of time required for the actual delivery of the parts to be used in product manufacturing since the part order to a part manufacturer.

### BRIEF DESCRIPTION OF THE DRAWINGS

FIG. 1 is an overall schematic view of the part order quantity computation system according to an embodiment of the present invention;
FIG. 2 is a flowchart showing the operation of computation of the part order quantity implemented in a host computer of the system illustrated in FIG. 1;
FIG. 3 is a table showing the inventory information displayed on the displays of each terminal computer on the basis of an inventory database of the system illustrated depicted in FIG. 1;
FIG. 4 is a flowchart, similar to FIG. 2, but showing the operation of computation of the part order quantity implemented in a host computer of the part order quantity computation system according to a second embodiment of the present invention; and
FIG. 5 is a flowchart, similar to FIG. 2, but showing the operation of computation of the part order quantity implemented in a host computer of the part order quantity computation system according to a third embodiment of the present invention.

### BEST MODE FOR CARRYING OUT THE INVENTION

The part order quantity computation system according to an embodiment of the present invention will be described hereinafter with reference to the accompanying drawings.

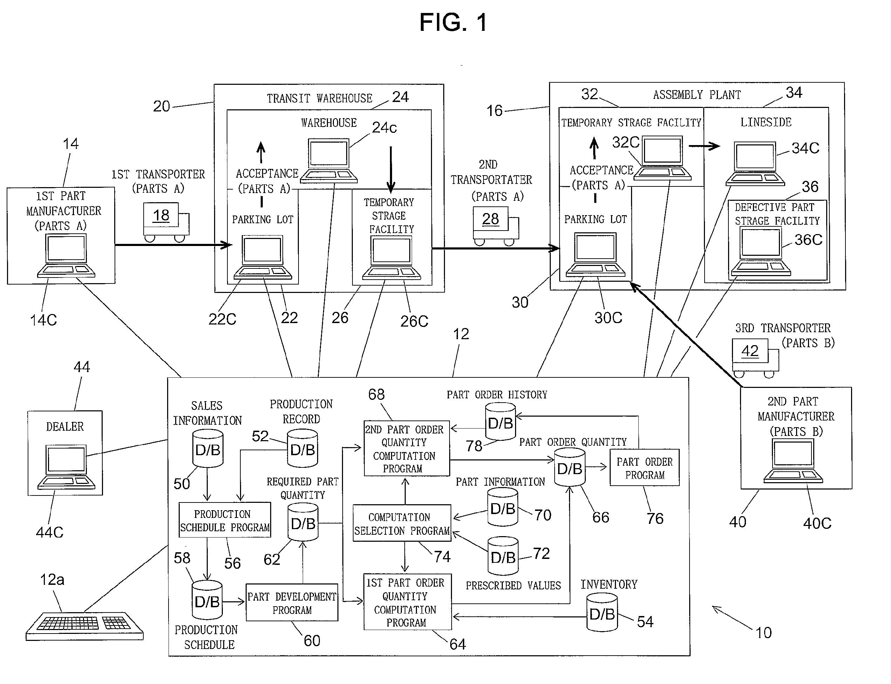

FIG. 1 is an overall schematic view of the part order quantity computation system according to this embodiment. The reference numeral 10 in the figure generally indicates the part order quantity computation system.

The part order quantity computation system 10 has a host computer 12 provided with various types of databases and arithmetic programs (described hereinafter), and a plurality of terminal computers disposed at the stages or processes of the part distribution route (the transport route of the parts from the part manufacturer(s) to the assembly plant) and connected to the host computer 12 via the internet or other communication network.

First explaining the part distribution route (indicated by the thick-lined arrow) with reference to the figure, a first part manufacturer 14 manufactures or produces parts (a group of parts) A in response to an order from an assembly plant (which orders the parts) 16. The first part manufacturer 14 is provided with a first part manufacturer computer 14C that sends the shipping quantity of parts A to the host computer 12, receives the order information of the parts A computed by the host computer 12 as described hereinafter, and displays the results on a display.

The parts A manufactured by the first part manufacturer 14 are loaded onto a first transporter (freight truck) 18 and are shipped to a transit warehouse 20 located between the first part manufacturer 14 and the assembly plant 16. The parts A are unloaded when the first transporter 18 carrying the parts A arrives at a parking lot 22 of the transit warehouse 20. The parking lot (parking lot of the transit warehouse) 22 is provided with a parking lot computer (computer used at the parking lot of the transit warehouse) 22C, and the incoming (warehousing) quantity and outgoing (dispatching) quantity of the parts A (incoming quantity information and outgoing quantity information from the first part manufacturer 14) are inputted or entered therein. The parking lot computer 22C computes the quantity of inventory in the parking lot 22 from the difference between the incoming quantity and outgoing quantity of parts A thus inputted, and sends the result to the host computer 12.

The parts A unloaded at the parking lot 22 are carried into a warehouse 24 after they are accepted by an orderer (those who that ordered the parts) and the type and quantity of the parts A have been checked. Acceptance is performed by inputting or entering the barcode information affixed to the box enclosing the parts A into a computer via a barcode reader. Computation of the incoming quantity of parts A is performed from this acceptance by the orderer, and ownership of the parts A for which acceptance is completed is transferred from the first part manufacturer 14 to the orderer. Specifically, the parts A carried into the warehouse 24 become the property of the orderer.

The warehouse 24 is provided with a warehouse computer 24C, and the incoming inventory and outgoing inventory of parts A (incoming inventory information and outgoing inventory information of the orderer) are inputted or entered therein. The warehouse computer 24C computes the quantity of inventory (stored quantity) in the warehouse 24 from the difference between the incoming quantity and outgoing quantity of parts A thus inputted, and sends the result to the host computer 12.

Some of parts A (stored in the warehouse 24) that are required at the assembly plant 16 are partially moved to a temporary storage facility (temporary storage facility for warehousing) 26. The temporary storage facility 26 is provided with a temporary storage facility computer (computer of the temporary storage facility for warehousing) 26C, and the incoming quantity and outgoing quantity of parts A (incoming quantity information and outgoing quantity information of the orderer) are inputted or entered therein. The temporary storage facility computer 26C computes the quantity of inventory (temporarily stored quantity) in the temporary storage facility 26 from the difference between the incoming quantity and outgoing quantity of parts A thus inputted, and sends the result to the host computer 12.

The parts A temporarily stored in the temporary storage facility 26 are loaded onto a second transporter (freight truck) 28 and are transported to the assembly plant 16. The parts A are unloaded when the second transporter 28 carrying the parts A arrives at a parking lot 30 of the assembly plant 16. The parking lot (parking lot of the assembly plant) 30 is provided with a parking lot computer (computer used at the parking lot of the assembly plant) 30C, and the incoming quantity and outgoing quantity of parts A (incoming quantity information and outgoing quantity information of the orderer) are inputted or entered therein. The parking lot computer 30C computes the quantity of inventory in the parking lot 30 from the difference between the incoming quantity and outgoing quantity of parts A thus inputted, and sends the result to the host computer 12.

The parts A unloaded at the parking lot 30 are stored in a temporary storage facility (temporary storage facility used by the assembly plant) 32. The temporary storage facility 32 has a temporary storage facility computer (computer of the temporary storage facility used by the assembly plant) 32C, and the incoming quantity and outgoing quantity of parts A (incoming quantity information and outgoing quantity information of the orderer) are inputted therein. The temporary storage facility computer 32C computes the quantity of inventory (temporarily stored quantity) in the temporary storage facility 32 from the difference between the incoming quantity and outgoing quantity of parts A thus inputted, and sends the result to the host computer 12.

The parts A temporarily stored in the temporary storage facility 32 are then carried into a line side 34 at a scheduled time and are used in the manufacture of a product (an automobile, for example). The line side 34 is provided with a line side computer 34C, and the incoming quantity and outgoing quantity of parts A (incoming quantity information and outgoing quantity information of the orderer) are inputted or entered therein. The line side computer 34C computes the quantity of inventory in the line side 34 from the difference between the incoming quantity and outgoing quantity of parts A thus inputted (quantity used in manufacturing), and sends the result to the host computer 12. The line side computer 34C also sends the production record of the products to the host computer 12.

One or several of the parts A that is found to be defective is treated as a defective part(s) in the line side 34, and is moved to a defective part storage facility 36. The defective part storage facility 36 is provided with a defective part storage facility computer 36C, the incoming quantity and outgoing quantity of the defective parts A are inputted or entered therein, and the quantity of inventory in the defective part storage facility 36 is sent to the host computer 12.

A second part manufacturer 40 manufactures parts (a group of parts) B in response to an order from the assembly plant 16. The second part manufacturer 40 is provided with a second part manufacturer computer 40C that sends the shipment quantity of the parts B to the host computer 12, receives the order information of the parts B computed by the host computer 12, and displays the results on a display.

The parts B manufactured by the second part manufacturer 40 are loaded onto a third transporter (freight truck) 42 and are shipped to the assembly plant 16. The parts B are unloaded when the third transporter 42 carrying the parts B arrives at the parking lot 30 of the assembly plant 16. The incoming quantity and the outgoing quantity of parts B (incoming quantity information and outgoing quantity information from the second part manufacturer 40) are inputted or entered to the parking lot computer 30C disposed at the parking lot 30, in the same manner as the case of parts A. The parking lot computer 30C computes the quantity of inventory in the parking lot 30 from the difference between the incoming quantity and outgoing quantity of parts B thus inputted, and sends the result to the host computer 12.

The parts B unloaded at the parking lot 30 are carried into the temporary storage facility 32 after they are accepted by the orderer and the type and quantity of the parts B have been checked. Computation of the quantity of inventory of the parts B is performed from this acceptance by the orderer, and ownership of the parts B for which acceptance is completed is transferred from the second part manufacturer 40 to the orderer. Specifically, the parts B carried into the line side 34 become the property of the orderer of the parts.

The incoming quantity and the outgoing quantity of parts B (incoming quantity information and outgoing quantity information of the orderer) are inputted or entered to the temporary storage facility computer 32C disposed at the temporary storage facility 32, in the same manner as in the case of parts A. The temporary storage facility computer 32C computes the quantity of inventory (temporarily stored quantity) in the temporary storage facility 32 from the difference between the incoming quantity and outgoing quantity of parts B thus inputted, and sends the result to the host computer 12.

The parts B temporarily stored in the temporary storage facility 32 are then carried into the line side 34. The incoming quantity and the outgoing quantity of parts B (incoming quantity information and outgoing quantity information of the orderer) are inputted or entered to the line side computer 34C disposed at the line side 34, in the same manner as in the case of parts A. The line side computer 34C computes the quantity of inventory in the line side 34 from the difference between the incoming quantity and outgoing quantity of parts B (quantity used in manufacturing) thus inputted, and sends the result to the host computer 12.

The finished products are sold to users via a dealer(s) 44. The dealer(s) 44 is provided with a dealer computer 44C, which sends the information (type or quantity) of the products sold (or contracted) to the host computer 12.

The terminal computers (except for the dealer computer 44C) disposed in the plurality of temporally sequential stages along the distribution route thus compute the quantity of inventory (including the temporarily stored quantity) from the difference between the incoming quantity and outgoing quantity of the parts in each stage, and send (transmit) the information to the host computer 12 via the internet or other communication network. The terminal computers also receive the inventory information (described hereinafter) of the stages that has been consolidated and centralized by the host computer 12, and display the information on their respective displays.

Thus, this embodiment is configured such that, the incoming quantity information and outgoing quantity information of the parts from the part manufacturers are inputted or entered to the terminal computers, the quantities of inventory at any of the stages are computed based on the difference between the aforementioned information, the incoming quantity information and outgoing quantity information of the orderer are entered to the terminal computers, and the quantity of inventory in each of the remaining stages can be computed based on the difference between these quantities in the information. It is therefore possible to accurately keep track of the quantity of inventory.

Summarizing the operation of the host computer 12, the host computer 12 prepares or creates various types of databases based on the information and the like inputted or entered in the manner as described above, and executes calculations according to a plurality of programs necessary for ordering parts based on the databases thus prepared.

Specifically, the host computer 12 prepares a sales information database (D/B) 50 based on the product sales information sent from the dealer computer 44C, and prepares a production record database 52 based on the production record information sent from the line side computer 34C.

The host computer 12 also prepares an inventory database 54 based on the information regarding the quantity of inventory of parts sent from the computers disposed in the stages along the part distribution route.

According to a production schedule program 56, a production schedule for a certain period of time is prepared based on the sales information database 50 and production record database 52 thus prepared, and a production schedule database 58 is prepared. According to a part development program 60, the type and required quantity of the parts to be used in the product are computed and a required part quantity database 62 is prepared based on the production schedule database 58 thus created.

In accordance with a first part order quantity computation program 64, the part order quantity is computed based on the actual inventory quantity stored in the inventory database 54 and on the required part quantity database 62, and a part order quantity database 66 is prepared. In accordance with a second part order quantity computation program 68, the part order quantity is computed in the same manner as in the first part order quantity computation program 64 on the basis of the production record database 52, the required part quantity database 62, and a part order history database (described hereinafter).

A keyboard (inputting means) 12a is connected to the host computer 12, and the price, size, and lead time of the individual parts are inputted or entered via the keyboard 12a. The inputted price, size, and lead time of the parts are stored in a part information database 70.

Furthermore, a prescribed price, a prescribed size, and a prescribed lead time to be compared with the aforementioned price, size, and lead time, respectively, of the parts are inputted to the host computer 12 via the keyboard 12a. The prescribed price, prescribed size, and prescribed lead time thus inputted are stored in a prescribed value database 72.

According to a computation selection program 74, one of the first part order quantity computation program 64 and second part order quantity computation program 68 is selected based on the various data stored in the part information database 70 and prescribed value database 72, and used.

According to a part order program 76, the order of the parts to the part manufacturer(s) is implemented on the basis of the part order quantity database 66, and stores and updates the order details in the part order history database 78.

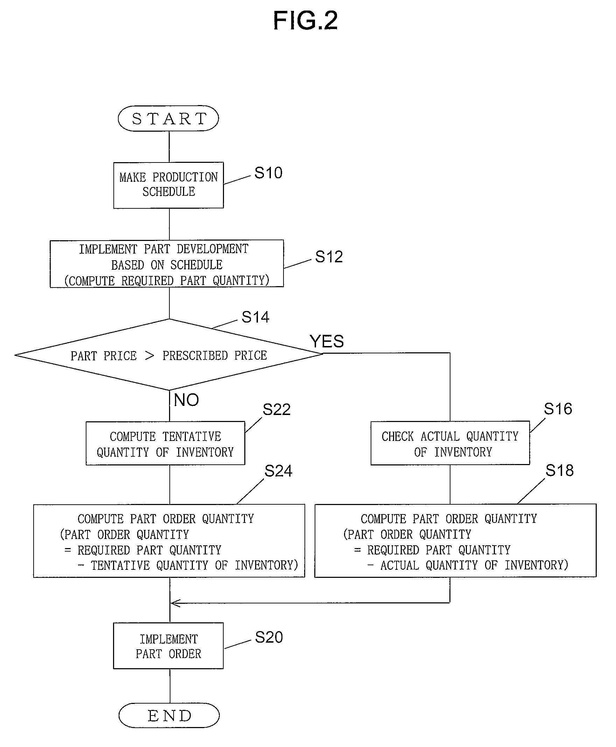

The operation of the abovementioned host computer 12 will be described in detail with reference to FIG. 2. FIG. 2 is a flowchart showing the operation of computation of the part order quantity implemented in the host computer 12.

Explaining this, first, in S10, a production schedule as to how many of what product are to be produced within a scheduled period of time, is made or planned (according to the production schedule program 56) based on the sales information (sales information database 50) and the past production record (production record database 52). Next in S12, based on the production schedule thus prepared, part development is implemented, i.e., necessary kind (type) and quantity of the parts (required part quantity) are computed (according to the part development program 60).

Then in S14, it is determined whether the price of the parts (a group of parts) stored in the part information database 70 exceeds the corresponding prescribed price stored in the prescribed value database 72 (according to the computation selection program 74). The price of the parts (a group of parts) referred to herein is a unit price per lot, for example, and the price may be a fixed price, or may be a variable price that varies depending on the number of lots ordered. The processing after S 14 is performed for each group of parts.

When the result of S14 is YES, the actual quantity of inventory is confirmed in S16.

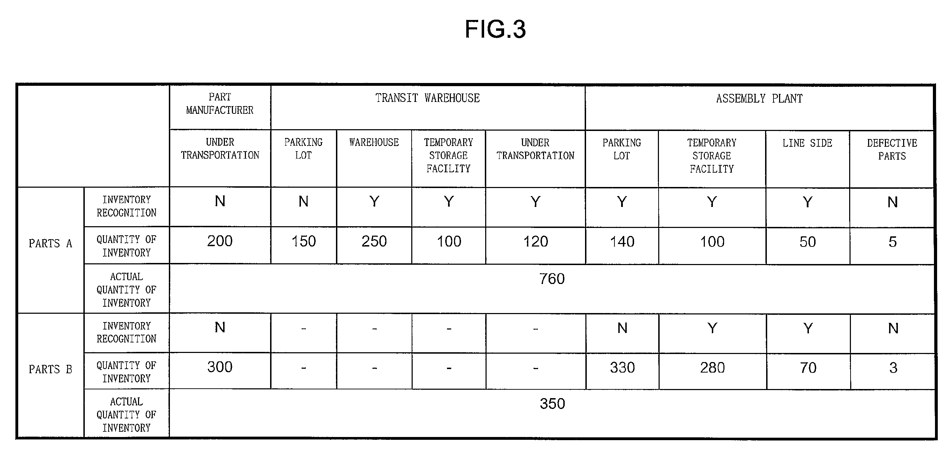

The actual quantity of inventory will be explained with reference to FIG. 3. FIG. 3 is a table showing the inventory information displayed on the display of each terminal computer based on the inventory database 54.

As shown in the table, the stages in part distribution from the part manufacturer's shipment to the arrival to the assembly plant line side mentioned above are divided in time-sequence and the information concerning the quantity of inventory of the parts sent from the computers disposed in the individual stages are each described. Specifically, the quantity of inventory in each stage is tabulated and shown in a consolidated fashion, such that the operator assigned to each stage can manage (check) the quantity of inventory in a lump. The quantity of inventory in the distribution route can thereby be managed in a time-sequential fashion, whereby it is possible to more accurately keep track of the quantity of inventory.

In the figure, the symbols "N," "Y," and "-" in the inventory recognition column indicate whether or not the quantity of inventory in the stage concerned is recognized as the actual quantity of inventory. "N" indicates that the inventory is not recognized as the actual quantity of inventory, and "Y" indicates that the inventory is recognized as the actual quantity of inventory. "-" indicates that no stage exists for the parts concerned. The symbols "N," "Y," and "-" in the inventory recognition column can be entered via the keyboard 12a. Specifically, it is configured such that selections can be arbitrarily made for respective parts (a group of parts) by the operator.

In this embodiment, the inventory for which acceptance by the orderer is completed; i.e., the quantity of inventory obtained from the difference between the incoming quantity information of the orderer and the outgoing quantity information thereof is designated as "Y", and the quantity of inventory obtained from the difference between the incoming quantity information from the part manufacturer and the outgoing quantity information thereof is designated as "N" (excluding defective parts). Specifically, as regards the parts A, the total of 760 units existing in a location from the warehouse 24 of the transit warehouse 20 to the line side 34 of the assembly plant 16 are recognized as the actual quantity of inventory, and as regards the parts B, the total of 350 units existing between the temporary storage facility 32 and line side 34 of the assembly plant 16 are recognized as the actual quantity of inventory.

Returning to the explanation of the flowchart in FIG. 2, in S18, the actual quantity of inventory is allocated to (subtracted from) the required quantity of parts, and a comparatively short-term (one day, for example) part order quantity is computed (according to the first part order quantity computation program 64). In S20, an order is issued to the part manufacturer(s) on the basis of the order quantity computed in S 18 (according to the part order program 76).

The part order quantity computation technique mentioned from S16 through S18 is thus a so-called MRP technique and with this, the quantity of inventory can be kept to the minimum number of units, and a stable supply of parts becomes possible.

Since it is configured such that, of among the inventories in the stages, the quantity of inventory computed based on the incoming quantity information of the orderer is recognized as the actual quantity of inventory, in other words, the quantity is regarded as the (subject-to-subtraction) quantity of inventory to be subtracted from the required quantity of parts in the production schedule. Inventory can therefore be appropriately managed regardless of differences in the part distribution routes. Since the decision as to whether or not to recognize it as the actual quantity of inventory can simply be changed via the keyboard 12a, it becomes easy to cope with the change in the distribution route, etc.

Continuing the explanation of the flowchart in FIG. 2, when the result of S14 is NO, in S22, a tentative or provisional quantity of inventory is computed based on the production record and part order history (according to the second part order quantity computation program 68). Specifically, the term "tentative or provisional quantity of inventory" indicates a quantity of inventory computed by subtracting the production record (i.e., the quantity of parts actually used) from the past part order quantity.

Then, in S24, the tentative quantity of inventory is allocated to the required quantity of parts, and the order quantity for a longer term (one week, for example) compared to that of the abovementioned MRP technique mentioned in S16 and S18, is computed (according to the second part order quantity computation program 68). In S20, the parts are ordered to the part manufacturer(s) on the basis of the order quantity computed in S24 (according to the part order program 76). Although the quantity of inventory cannot be managed by the part order quantity computation technique of S22 through S24 as appropriately as by the MRP technique of S16 through S18, it becomes possible to make bulk orders and bundled shipments of parts, and the benefits of mass production can therefore be obtained with respect to the unit price of parts, shipping cost, and other factors.

As described above, the determination in S14 of the flowchart in FIG. 2 corresponds to determining which of cost minimization by bulk ordering (due to volume efficiency) or cost minimization by inventory reduction is effective based on the price of the parts.

For example, assume that a rearview mirror assembly mounted in the vicinity of an automobile windshield is available in a plurality of types in the price range of 2000 to 5000 yen according to the type of automobile, cost minimization by bulk ordering is possible with a relatively inexpensive rearview mirror assembly costing 3000 yen or less by setting the aforementioned prescribed price to 3000 yen, for example, whereas cost minimization by inventory reduction is possible for a relatively expensive rearview mirror assembly costing more than 3000 yen. In other words, even for the same parts, the technique of computing the order quantity can be varied in response to the price, and the benefits of the individual computation techniques can be obtained.

Since the part price and the prescribed price (the threshold value thereof) can be inputted (changed) via the keyboard 12a as previously described, it is possible to easily modify the technique of computing the order quantity in response to the past production record, part specification changes (manufacturing cost increase/decrease), exchange rate fluctuation in remittance, and the like.

The first embodiment is thus configured to have a system (10) for computing an order quantity of parts (parts A, parts B) constituting a product based on a production schedule of the product, comprising: required part quantity computing means (host computer 12, part development program 60, S12) for computing a required quantity of the parts based on the production schedule; actual inventory quantity checking means (host computer 12, inventory database 54, S16) for checking an actual quantity of inventory of the parts; first part order quantity computing means (host computer 12, first part order quantity computation program 64, S18) for computing a first part order quantity for a predetermined first period of time based on the computed required quantity of the parts and the checked actual quantity of inventory of the parts; tentative inventory quantity computing means (host computer 12, second part order quantity computation program 68, S22) for computing a tentative quantity of inventory of the parts based on a past order record of the parts and a production record of the product; second part order quantity computing means (host computer 12, second part order quantity computation program 68, S24) for computing a second part order quantity for a predetermined second period of time, longer than the predetermined first period of time, based on the computed required quantity of the parts and the computed tentative quantity of inventory of the parts; price inputting means (keyboard 12a) for inputting a price of the parts; part price storing means (host computer 12, part information database 70) for storing the inputted price of the parts; prescribed price inputting means (keyboard 12a) for inputting a prescribed price to be compared with the inputted price of the parts; prescribed price storing means (host computer 12, prescribed value database 72) for storing the inputted prescribed price; selecting means (host computer 12, computation technique selection program 74, S14) for comparing the inputted price with the stored prescribed price and for selecting the first part order quantity computing means when the inputted price is greater than the stored prescribed price, while for selecting the second part order quantity computing means for selecting the second part order quantity computing means when the inputted price is equal to or less than the stored prescribed price; and part ordering means (host computer 12, part order program 76, S20) for ordering the parts based on the part order quantity computed by the selected part order quantity computing means.

Thus, in the first embodiment, it is configured such that, two different part order quantity computation techniques are selected to be used on the basis of the price of the parts, it becomes easier to modify the part order quantity computation technique in response to the price of the parts, thereby enabling to effectively obtain the advantages of two different part order quantity computation techniques.

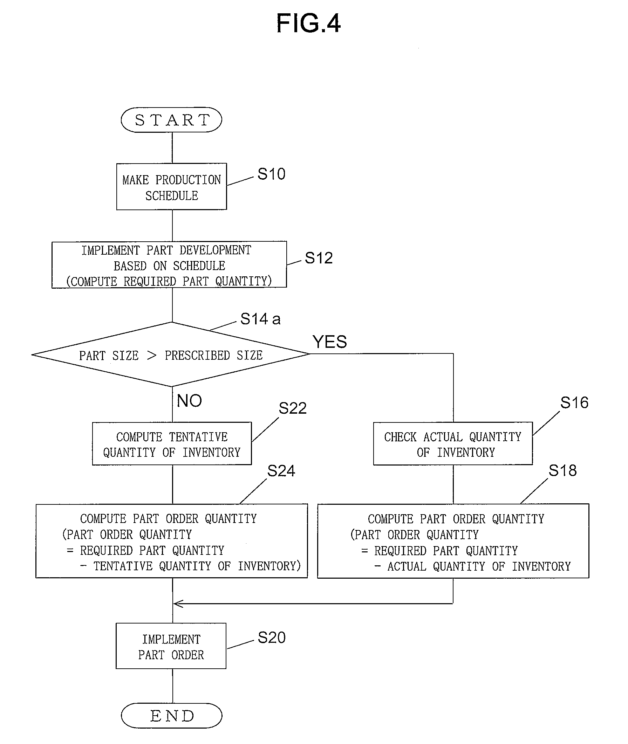

The part order quantity computation system according to a second embodiment of the present invention will next be described with reference to FIG. 4. FIG. 4 is a flowchart, similar to FIG. 2, but showing the operation of computation of the part order quantity implemented in the host computer 12 of the part order quantity computation system according to the second embodiment.

Explaining the second embodiment with focus on the differences from the first embodiment, the second embodiment is configured such that, it is determined in S14a whether the size of the parts stored in the part information database 70 is larger than the prescribed size stored in the prescribed value database 72. Since the storage space increases with increasing part size, when the result of S14a is YES and it is determined that the part size is larger than the prescribed size, the part order quantity is computed based on the actual quantity of inventory in S16, such that the quantity of inventory is reduced. On the other hand, when the result of S14a is NO, in S22 and below, the part order quantity is computed based on the tentative quantity of inventory, such that the effects of mass production are obtained.

Size comparison may be performed based on the parameters of width, depth, and height of the parts, or based on the volume thereof.

For example, it may be configured such that, when the prescribed sizes of the aforementioned rearview mirror assembly is set to a width of 250 mm, a depth of 100 mm, and a height of 130 mm, the part order quantity is computed based on the actual quantity of inventory for a rearview mirror assembly if at least one of the parameters of width, depth, and height exceeds the aforementioned prescribed values (for example, when the width is 230 mm, the depth is 80 mm, and the height is 150 mm), whereas the part order quantity is computed based on the tentative quantity of inventory for a rearview mirror assembly in which all of the numerical values are equal to or less than the prescribed values.

It should also be noted that the part order quantity may be computed based on the actual quantity of inventory for the rearview mirror assembly in which two or all three of the parameters that include width, depth, and height exceed the prescribed values, whereas the part order quantity may be computed based on the tentative quantity of inventory for the rearview mirror assembly whose dimensions are otherwise. Comparison may also be performed on the basis of the volume obtained by multiplying the width, depth, and height.

Having been configured in the foregoing manner, the technique of computing the order quantity can be varied according to the sizes, and the benefits of each computation technique can be obtained even for same or similar parts. Since the size of the parts and the prescribed size that is the threshold value thereof can be inputted (modified) via the keyboard 12a as previously described, it becomes possible to easily change the technique of computing the order quantity in response to past production records, changes in storage location, or part specification changes (size changes).

The second embodiment is thus configured to have a system (10) for computing an order quantity of parts (parts A, parts B) constituting a product based on a production schedule of the product, comprising: required part quantity computing means (host computer 12, part development program 60, S12) for computing a required quantity of the parts based on the production schedule; actual inventory quantity checking means (host computer 12, inventory database 54, S16) for checking an actual quantity of inventory of the parts; first part order quantity computing means (host computer 12, first part order quantity computation program 64, S18) for computing a first part order quantity for a predetermined first period of time based on the computed required quantity of the parts and the checked actual quantity of inventory of the parts; tentative inventory quantity computing means (host computer 12, second part order quantity computation program 68, S22) for computing a tentative quantity of inventory of the parts based on a past order record of the parts and a production record of the product; second part order quantity computing means (host computer 12, second part order quantity computation program 68, S24) for computing a second part order quantity for a predetermined second period of time, longer than the predetermined first period of time, based on the computed required quantity of the parts and the computed tentative quantity of inventory of the parts; size inputting means (keyboard 12a) for inputting a size of the parts; part size storing means (host computer 12, part information database 70) for storing the inputted size of the parts; prescribed size inputting means (keyboard 12a) for inputting a prescribed size to be compared with the inputted size of the parts; prescribed size storing means (host computer 12, prescribed value database 72) for storing the inputted prescribed price; selecting means (host computer 12, computation technique selection program 74, S14a) for comparing the inputted size with the stored prescribed size and for selecting the first part order quantity computing means when the inputted size is greater than the stored prescribed size, while for selecting the second part order quantity computing means for selecting the second part order quantity computing means when the inputted size is equal to or less than the stored prescribed size; and part ordering means (host computer 12, part order program 76, S20) for ordering the parts based on the part order quantity computed by the selected part order quantity computing means.

Specifically, the second embodiment is configured such that, two different part order quantity computation techniques are selected to be used on the basis of the size of the parts, it becomes possible to easily modify the part order quantity computation technique in response to the size of the parts, thereby enabling to obtain the advantages of two different part order quantity computation techniques effectively.

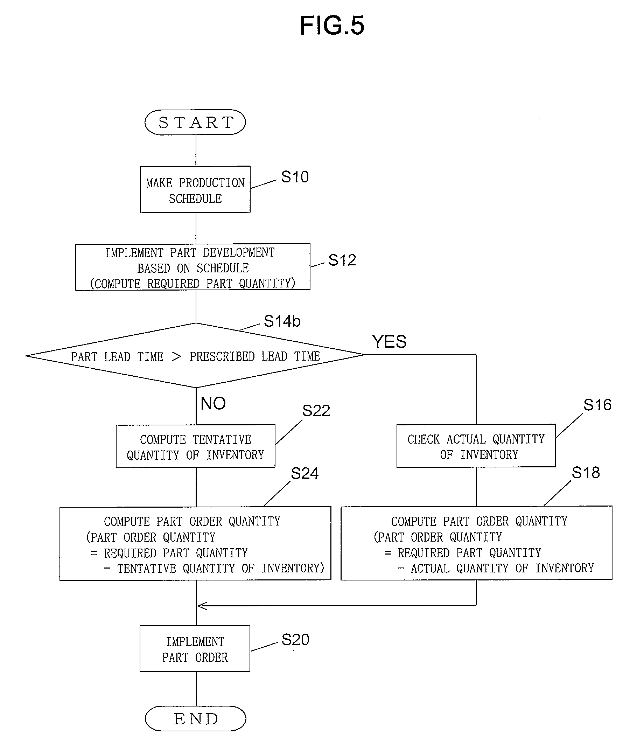

The part order quantity computation system according to a third embodiment of the present invention will next be described with reference to FIG. 5. FIG. 5 is a flowchart, similar to FIG. 2, but showing the operation of computation of the part order quantity implemented in the host computer 12 of the part order quantity computation system according to the third embodiment.

Explaining the third embodiment with focus on the differences from the first and second embodiments, the third embodiment is configured such that, it is determined in S 14b whether the lead time of the parts stored in the part information database 70 is longer than the prescribed lead time stored in the prescribed value database 72. The term "lead time" used herein refers to a period of time until the parts are actually delivered to be used in product manufacturing since ordering parts to the part manufacturer.

The longer the lead time, the more difficult it becomes to maintain the time period from the part order to the actual delivery constant. Since a long transportation distance is considered to be one of the factors that elongates the lead time, a single shipment of a bulk quantity instead of repeatedly shipping over a short span is sometimes preferred with regard to transportation costs or maintaining a steady supply. Accordingly, when the result of S14b is YES and it is determined that the lead time is longer than the prescribed lead time, the part order quantity is computed based on the tentative quantity of inventory in S22 and below.

On the other hand, when the result of S14b is NO, the part order quantity is computed based on the actual quantity of inventory in S16 and onward.

For example, it is assumed that the aforementioned first part manufacturer 14 produces the aforementioned rearview mirror assembly and exists in a country different from that of the assembly plant 16. It is also assumed that the aforementioned second part manufacturer 40 produces the rearview mirror assembly same as the first part manufacturer 14 and exists in the same country as the assembly plant 16.

Here, if, for example, the lead time for the rearview mirror assembly produced by the first part manufacturer 14 is two weeks, and that for the rearview mirror assembly produced by the second part manufacturer 40 is three days, setting the prescribed lead time to one week would allow the order quantity of the rearview mirror assembly produced by the first part manufacturer 14 to be computed based on the tentative quantity of inventory and to transport the assembly in bulk, whereas the part order quantity for the rearview mirror assembly produced by the second part manufacturer 40 would be computed based on the actual quantity of inventory, such that the inventory would be reduced.

With this, the technique of computing the order quantity can be varied in response to the lead time (production location), and the benefits of each computation technique can be obtained even for the same or similar parts. Since the lead time of the parts and the prescribed lead time (the threshold value thereof) can be inputted (modified) via the keyboard 12a as previously described, it becomes possible to easily modify the technique of computing the order quantity in response to past production records, or change of production locations, or transporters.

The third embodiment is thus configured to have a system (10) for computing an order quantity of parts (parts A, parts B) constituting a product based on a production schedule of the product, comprising: required part quantity computing means (host computer 12, part development program 60, S12) for computing a required quantity of the parts based on the production schedule; actual inventory quantity checking means (host computer 12, inventory database 54, S16) for checking an actual quantity of inventory of the parts; first part order quantity computing means (host computer 12, first part order quantity computation program 64, S18) for computing a first part order quantity for a predetermined first period of time based on the computed required quantity of the parts and the checked actual quantity of inventory of the parts; tentative inventory quantity computing means (host computer 12, second part order quantity computation program 68, S22) for computing a tentative quantity of inventory of the parts based on a past order record of the parts and a production record of the product; second part order quantity computing means (host computer 12, second part order quantity computation program 68, S24) for computing a second part order quantity for a predetermined second period of time, longer than the predetermined first period of time, based on the computed required quantity of the parts and the computed tentative quantity of inventory of the parts; lead time inputting means (keyboard 12a) for inputting a lead time of the parts; part lead time storing means (host computer 12, part information database 70) for storing the inputted lead time of the parts; prescribed lead time inputting means (keyboard 12a) for inputting a prescribed lead time to be compared with the inputted lead time of the parts; prescribed lead time storing means (host computer 12, prescribed value database 72) for storing the inputted prescribed lead time; selecting means (host computer 12, computation technique selection program 74, S14b) for comparing the inputted lead time with the stored prescribed lead time and for selecting the first part order quantity computing means when the inputted lead time is greater than the stored prescribed lead time, while for selecting the second part order quantity computing means for selecting the second part order quantity computing means when the inputted lead time is equal to or less than the stored prescribed lead time; and part ordering means (host computer 12, part order program 76, S20) for ordering the parts based on the part order quantity computed by the selected part order quantity computing means.

Specifically, the third embodiment is configured such that, two different part order quantity computation techniques are selected to be used on the basis of the lead time of the parts, it becomes easier to change the part order quantity computation technique in response to the lead time of the parts, thereby enabling to obtain the advantages of two different part order quantity computation techniques effectively.

It should be noted in that, although selection of the part order quantity computation techniques is performed based on one from among the price, size, or lead time of the parts, the selection may also be made in response to a combination of these factors.

It should also be noted that, although the two groups of parts A and B having different distribution routes are used as examples of the parts, these are only examples, and it is apparent that the types or kinds of the parts and distribution routes thereof may be one, or three or more groups.

It should further be noted that, although a freight truck is used as an example of the transporter, it is apparent that the transporter may also be a cargo ship, freight train, cargo plane, or the like.

### INDUSTRIAL APPLICABILITY

According to the present invention, it is configured to have an order quantity computing technique that computes a relatively short-term part order quantity based on the actual quantity of the parts so as to decrease the quantity of inventory and to achieve a stable part supply, and an order quantity computing technique that computes a relatively long-term order quantity based on the tentative quantity of inventory of the parts (a quantity of inventory computed based on past order quantities and production records) so as to obtain mass production effects such that one of them is selected to be used based on one from among the price, size and lead time of the parts. With this, it becomes possible to easily change the part order quantity computation technique, thereby enabling to effectively utilize the advantages of two different part order quantity computation techniques.

## Claims

1. A system for computing an order quantity of parts constituting a product based on a production schedule of the product, comprising:
a. required part quantity computing means for computing a required quantity of the parts based on the production schedule;
b. actual inventory quantity checking means for checking an actual quantity of inventory of the parts;
c. first part order quantity computing means for computing a first part order quantity for a predetermined first period of time based on the computed required quantity of the parts and the checked actual quantity of inventory of the parts;
d. tentative inventory quantity computing means for computing a tentative quantity of inventory of the parts based on a past order record of the parts and a production record of the product;
e. second part order quantity computing means for computing a second part order quantity for a predetermined second period of time, longer than the predetermined first period of time, based on the computed required quantity of the parts and the computed tentative quantity of inventory of the parts;
f. price inputting means for inputting a price of the parts;
g. part price storing means for storing the inputted price of the parts;
h. prescribed price inputting means for inputting a prescribed price to be compared with the inputted price of the parts;
i. prescribed price storing means for storing the inputted prescribed price;
j. selecting means for comparing the inputted price with the stored prescribed price and for selecting the first part order quantity computing means when the inputted price is greater than the stored prescribed price, while for selecting the second part order quantity computing means when the inputted price is equal to or less than the stored prescribed price; and
k. part ordering means for ordering the parts based on the part order quantity computed by the selected part order quantity computing means.

2. A system for computing an order quantity of parts constituting a product based on a production schedule of the product, comprising:
a. required part quantity computing means for computing a required quantity of the parts based on the production schedule;
b. actual inventory quantity checking means for checking an actual quantity of inventory of the parts;
c. first part order quantity computing means for computing a first part order quantity for a predetermined first period of time based on the computed required quantity of the parts and the checked actual quantity of inventory of the parts;
d. tentative inventory quantity computing means for computing a tentative quantity of inventory of the parts based on a past order record of the parts and a production record of the product;
e. second part order quantity computing means for computing a second part order quantity for a predetermined second period of time, longer than the predetermined first period of time, based on the computed required quantity of the parts and the computed tentative quantity of inventory of the parts;
f. size inputting means for inputting a size of the parts;
g. part size storing means for storing the inputted size of the parts;
h. prescribed size inputting means for inputting a prescribed size to be compared with the inputted size of the parts;
i. prescribed size storing means for storing the inputted prescribed size;
j. selecting means for comparing the inputted size with the stored prescribed size and for selecting the first part order quantity computing means when the inputted size is greater than the stored prescribed size, while for selecting the second part order quantity computing means when the inputted size is equal to or less than the stored prescribed size; and
k. part ordering means for ordering the parts based on the part order quantity computed by the selected part order quantity computing means.

3. A system for computing an order quantity of parts constituting a product based on a production schedule of the product, comprising:
a. required part quantity computing means for computing a required quantity of the parts based on the production schedule;
b. actual inventory quantity checking means for checking an actual quantity of inventory of the parts;
c. first part order quantity computing means for computing a first part order quantity for a predetermined first period of time based on the computed required quantity of the parts and the checked actual quantity of inventory of the parts;
d. tentative inventory quantity computing means for computing a tentative quantity of inventory of the parts based on a past order record of the parts and a production record of the product;
e. second part order quantity computing means for computing a second part order quantity for a predetermined second period of time, longer than the predetermined first period of time, based on the computed required quantity of the parts and the computed tentative quantity of inventory of the parts;
f. lead time inputting means for inputting a lead time of the parts;
g. part lead time storing means for storing the inputted lead time of the parts;
h. prescribed lead time inputting means for inputting a prescribed lead time to be compared with the inputted lead time of the parts;
i. prescribed lead time storing means for storing the inputted prescribed lead time;
j. selecting means for comparing the inputted lead time with the stored prescribed lead time and for selecting the first part order quantity computing means when the inputted lead time is greater than the stored prescribed lead time, while for selecting the second part order quantity computing means when the inputted lead time is equal to or less than the stored prescribed; and
k. part ordering means for ordering the parts based on the part order quantity computed by the selected part order quantity computing means.
